(19) Europäisches Patentamt

European Patent Office

Office européen des brevets

(11) **EP 0 938 766 B1**

(12) **EUROPÄISCHE PATENTSCHRIFT**

(45) Veröffentlichungstag und Bekanntmachung des Hinweises auf die Patenterteilung:
**09.03.2005   Patentblatt 2005/10**

(21) Anmeldenummer: **98948740.0**

(22) Anmeldetag: **07.08.1998**

(51) Int Cl.⁷: $H02H\ 7/085$

(86) Internationale Anmeldenummer:
**PCT/DE1998/002268**

(87) Internationale Veröffentlichungsnummer:
**WO 1999/014835 (25.03.1999 Gazette 1999/12)**

(54) **ELEKTROMOTORISCHER ANTRIEB**

CONTROL SYSTEM USING AN ELECTRIC MOTOR

SYSTEME DE COMMANDE PAR MOTEUR ELECTRIQUE

(84) Benannte Vertragsstaaten:
**DE ES FR GB IT**

(30) Priorität: **18.09.1997   DE 19741245**
         **16.04.1998   DE 19816837**

(43) Veröffentlichungstag der Anmeldung:
**01.09.1999   Patentblatt 1999/35**

(73) Patentinhaber: **ROBERT BOSCH GMBH**
**70442 Stuttgart (DE)**

(72) Erfinder: **MACK, Rolf**
**D-76547 Sinzheim (DE)**

(56) Entgegenhaltungen:
**WO-A-93/23904          US-A- 4 550 277**

• **PATENT ABSTRACTS OF JAPAN vol. 017, no. 630 (E-1463), 22. November 1993 & JP 05 199651 A (MUTOH IND LTD), 6. August 1993**

**Beschreibung**

Die Erfindung betrifft einen elektromotorischen Antrieb, mit einem über eine Endstufe ansteuerbaren Elektromotor.

Stand der Technik

Elektromotorische Antriebe der gattungsgemäßen Art sind bekannt. Diese werden beispielsweise in Kraftfahrzeugen als Stellmotoren eingesetzt. Hierbei werden diese mit einer von einer Kraftfahrzeugbatterie bereitgestellten Versorgungsspannung betrieben. Die als Gleichstrommotoren ausgebildeten Elektromotoren können unter anderem in thermisch kritischen Bereichen des Kraftfahrzeuges, beispielsweise in unmittelbarer Nähe einer Brennkraftmaschine, eingesetzt werden. Ferner ist bekannt, elektromotorische Antriebe mit einem Überlastschutz zu versehen, der die Elektromotoren vor irreparabler thermischer Beschädigung, beispielsweise bei plötzlich auftretender Schwergängigkeit, schützen soll.

Bekannt ist, zum Schutz von Elektromotoren vor thermischer Überlastung eine Gehäusetemperatur und/oder eine Ankerwicklungstemperatur des Gleichstrommotors über einen Temperatursensor oder über ein Bimetall zu erfassen. In Abhängigkeit der Überschreitung einer zulässigen Temperatur wird der Elektromotor stromlos geschaltet.

Ferner ist bekannt, elektrische Verbraucher, beispielsweise Motorendstufen für Gleichstrommotoren in Kraftfahrzeugen, mit einem pulsweiten-modulierten Signal anzusteuern. Entsprechend eines Tastverhaltens des pulsweiten-modulierten Signales erfolgt eine Verbindung des elektrischen Verbrauchers mit einer Spannungsquelle beziehungsweise eine Trennung von der Spannungsquelle.

Aus der WO 94/27349 ist ein elektromotorischer Antrieb bekannt, bei dem eine Motorendstufe mit einer Ansteuerschaltung verbunden ist, und die Ansteuerschaltung ein Überlastsignal in Abhängigkeit einer Temperatur des Elektromotors generiert. Eine Temperatur des Elektromotors kann hierbei aus einer Verlustleistung oder einer zu dieser proportionalen Größe anhand gemessener Motordaten während der Einschaltdauer des Elektromotors berechnet und integriert werden, wobei zur Übermittlung des Überlastsignales der Integrationswert mit einem vorgebbaren Schwellwert verglichen wird. Hierbei ist nachteilig, daß aufgrund der erforderlichen Messung von Motordaten während der Einschaltdauer des Elektromotors ein Meßaufwand betrieben werden muß, der darüber hinaus fehlerbehaftet ist, so daß ein exaktes Überlastsignal nicht ermittelbar ist.

Vorteile der Erfindung

Der erfindungsgemäße elektromotorische Antrieb mit den im Anspruch 1 genannten Merkmalen bietet demgegenüber den Vorteil, daß in einfacher Weise ein exaktes Überlastsignal zur Abschaltung des elektromotorischen Antriebes bereitgestellt werden kann. Dadurch, daß die Motortemperatur des Elektromotors aus einem Pulsweiten-Modulations-Signal der Ansteuerschaltung gewonnen wird, kann auf die Messung von Motordaten während des Betriebes des Elektromotors verzichtet werden. Der Schaltungsaufwand ist damit erheblich vereinfacht. Mit der Messung von Motordaten während des Betriebes verbundene Fehlerquellen werden ebenfalls umgangen, so daß das Signal mit hoher Genauigkeit generierbar ist. Eine Ermittlung der Motortemperatur erfolgt ausschließlich aus bereits vorhandenen Signalen, nämlich dem Pulsweiten-Modulations-Signal zur Ansteuerung des Elektromotors. Irgendwelche zusätzlichen direkten Messungen von Betriebsparametern des Motors, beispielsweise eines Stromes oder einer Temperatur, sind nicht erforderlich.

Weitere bevorzugte Ausgestaltungen der Erfindung ergeben sich aus den übrigen, in den Unteransprüchen genannten Merkmalen.

Zeichnung

Die Erfindung wird nachfolgend in einem Ausführungsbeispiel anhand der zugehörigen Zeichnung, die ein Blockschaltbild eines elektromotorischen Antriebes zeigt, näher erläutert.

Beschreibung des Ausführungsbeispiels

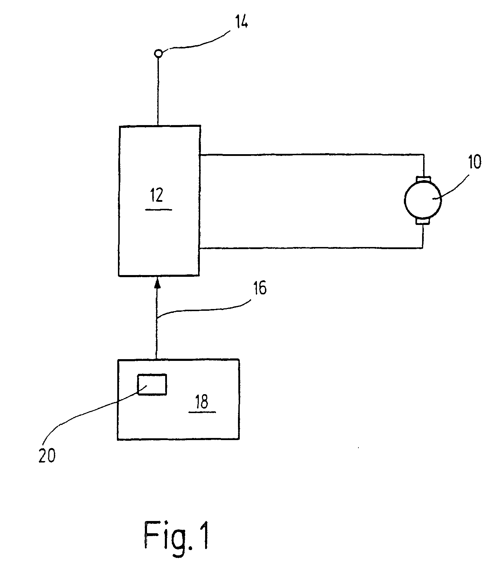

Figur 1 zeigt in einem Blockschaltbild einen elektromotorischen Antrieb. Dieser umfaßt einen Gleichstrommotor 10, der beispielsweise als Stellmotor in einem Kraftfahrzeug wirkt. Der Gleichstrommotor 10 ist an eine Endstufe 12 angeschlossen, die Schaltmittel zum Verbinden des Gleichstrommotors 10 mit einer Energiequelle 14 aufweist. In Kraftfahrzeugen ist die Energiequelle beispielsweise eine Kraftfahrzeugbatterie. Der Schaltstufe 12 wird ein Steuersignal 16 zugeführt, das von einer Ansteuerschaltung 18 bereitgestellt wird. Mittels der Ansteuerschaltung 18 erfolgt eine pulsweiten-modulierte Ansteuerung der Schaltstufe 12, so daß in bekannter Weise eine getaktete Betriebsweise des Gleichstrommotors 10 möglich ist.

Während des bestimmungsgemäßen Einsatzes des Gleichstrommotors 10 kann dieser, beispielsweise durch Schwergängigkeit oder Vorhandensein eines Hindernisses, in einem Stellweg eines mit dem Gleichstrommotor 10 bewegbaren Stellgliedes mechanisch und thermisch überlastet werden, so daß eine Temperaturüberwachung des Gleichstrommotors 10 zum rechtzeitigen Generieren eines Überlastsignales erforderlich ist. Hierzu ist in der Ansteuerschaltung 18 eine Überlaststufe 20 integriert.

Die Ermittlung einer Temperatur des Gleichstrommotors 10 mittels der Überlaststufe 20 erfolgt anhand eines Temperaturmodells folgendermaßen:

Bekanntermaßen hängt die Temperatur des Gleichstrommotors 10 von einer zugeführten und einer abgegebenen Leistung ab. Es ergibt sich

$$P_T = P_{zu} - P_{ab},$$

wobei $P_T$ die Temperaturleistung des Gleichstrommotors, $P_{zu}$ die zugeführte und $P_{ab}$ die abgeführte Leistung ist. Die abgeführte Leistung $P_{ab}$ kann bei vorgegebenem bekannten Aufbau des Gleichstrommotors, beispielsweise anhand eines Dauerlauftestes, ermittelt werden und als konstant angenommen werden.

Die zugeführte Leistung ergibt sich aus der Beziehung

$$P_{zu} = U \cdot I = U^2 / R,$$

wobei U dem über die Ansteuerschaltung 18 vorgegebenen pulsweiten-modulierten Spannungssignal 16, I dem Motorstrom und R dem Ankerwiderstand des Motors entspricht. Der Widerstand R kann unter Vernachlässigung einer Temperaturabhängigkeit als konstant angenommen werden. Erfahrungsgemäß schwankt der Ankerwiderstand R des Gleichstrommotors 10 bei einem Temperaturbereich von beispielsweise -40°C bis +85°C um circa 50%.

Für die Ermittlung der Temperatur des Gleichstrommotors 10 muß zwischen zwei Betriebssituationen unterschieden werden. In einer ersten Betriebssituation (diabatischer Fall) ist ein Anker des Gleichstrommotors 10 in Bewegung, so daß über Kohlebürsten Wärme am gesamten Umfang eines Kommutators des Ankers abgeführt werden kann. Eine zweite Situation (adiabatischer Fall) ist gegeben, wenn der Anker des Gleichstrommotors 10 steht oder sich nur geringfügig dreht. Hierbei ist eine Wärmeabfuhr über die Kohlebürsten vom Kommutator stark eingeschränkt, so daß eine schnellere Erwärmung des Ankers und der Kohlebürste erfolgen kann.

Nachfolgend wird die Ermittlung einer Temperatur des Gleichstrommotors 10 aus dem pulsweitenmodulierten Signal 16 der Ansteuerschaltung 18 erläutert. Die Temperatur wird hierbei anhand einer Modellrechnung, das heißt ohne direkte Temperaturmessung, beispielsweise über einen Temperatursensor oder dergleichen, ermittelt. Die Temperaturermittlung kann in bestimmten Zeitintervallen erfolgen. Hierbei kann beispielsweise als Zeitintervall für die Berechnung der aktuellen Temperaturleistung $P_T$ das Zeitraster der digitalen Pulsweiten-Modulations-Signale gewählt werden. Beispielsweise mit jeder Flanke von einem Übergang des digitalen Signales von AUS in EIN und/oder von EIN in AUS kann die Berechnung erfolgen. Zweckmäßig ist jedoch, die Berechnung in einem Zeitintervall durchzuführen, der jedoch nur jeden n-ten Stellwert (jede n-te Flanke) berücksichtigt. Mittels eines Filters kann hierbei der n-te zu berücksichtigende Wert ermittelt werden.

Eine momentane Leistung $P_{mom}$ ergibt sich aus einer Quadrierung des momentanen digitalen Pulsweiten-Modulations-Signales 16 $PWM_{mom}$. Dies entspricht der aktuellen Ausgabe des Pulsweiten-Modulations-Signales 16 an die Schaltstufe 12. Es gilt also:

$$P_{mom} = PWM_{mom} \cdot PWM_{mom}$$

Eine im Gleichstrommotor 10 mit steigender Drehzahl auftretende Gegenspannung wird hierbei nicht berücksichtigt, sondern diese wird im Mittel als proportionaler Faktor angenommen, der durch anschließende Parametrierung berücksichtigbar ist.

Anschließend wird von der errechneten Leistung $P_{mom}$ eine vom konkreten Gleichstrommotor 10 abhängige, maximal zulässige Leistung $P_{grenz}$ subtrahiert, so daß sich eine Differenzleistung $P_{diff}$ wie folgt ergibt:

$$P_{diff} = P_{mom} - P_{grenz}.$$

Zu jedem, für die Berechnung der Momentanleistung herangezogenen Zeitintervall (n-te Flanke des Signales 16), wird die Differenzleistung $P_{diff}$ aufintegriert, wobei gilt:

$$P_{neu} = P_{alt} + P_{diff}.$$

Erreicht die so aufintegrierte Leistung $P_{neu}$ eine für den Gleichstrommotor festlegbare Warnleistung $P_{warn}$ kann über die Ansteuerschaltung 18 das pulsweitenmodulierte Signal 16 für die Schaltstufe 12 so variiert werden, daß eine weniger leistungsintensive Ansteuerung erfolgt. Hierdurch wird die Temperaturbelastung des Gleichstrommotors 10 vermindert. Durch weitere Aufintegration der Differenzleistung $P_{diff}$ wird eine festlegbare Abschaltschwelle $P_{max}$ erreicht, zu der der Gleichstrommotor 10 abgeschaltet wird. Gleichzeitig erfolgt bei weiterer laufender Berechnung in jedem festgelegten Zeitintervall eine Absenkung des Integrationswertes $P_{neu}$ linear um die Grenzleistung $P_{grenz}$. Ein Einschalten des Gleichstrommotors 10 kann dann erfolgen, wenn der Integrationswert $P_{neu}$ eine festlegbare Grenze $P_{min}$ erreicht hat. Mit Einschalten des Gleichstrommotors 10 über das Pulsweiten-Modulations-Signal 16 beginnt die Aufintegration zur Leistung $P_{neu}$, entsprechend des genannten Ablaufes, neu.

Durch ein auf den konkreten Gleichstrommotor 10 und dessen konkrete Einsatzbedingung abgestimmtes charakteristisches Dauerlaufprogramm kann die maximal zulassige Dauerlast simuliert werden. Hierbei sind die schlechtmöglichsten Bedingungen, beispielsweise hinsichtlich einer Außentemperatur und einer Luftfeuchte, gegebenenfalls unter Berücksichtigung einer Zwangskühlung im Zusammenhang mit einem repräsentativen, das heißt durchschnittlich zu erwartenden Last-moment zu berücksichtigen. Die maximal zulässige Dauerbelastung kann ermittelt werden, indem die Außentemperatur und gegebenenfalls die Luftfeuchte auf die schlechtmöglichsten zu erwartenden Werte eingestellt werden. Anschließend werden ein Dauerlaufzyklus und/oder ein Lastmoment solange schrittweise erhöht, bis eine gerade noch zulässige Temperatur des Gleichstrommotors 10 erreicht ist. Aufgrund vorhandener Zeitkonstanten muß zur Ermittlung der zulässigen Dauerbelastung ein geringfügig unter dem ermittelten zulässigen Wert liegender Wert ermittelt werden. Unter diesen dann gewählten Belastungsparametern wird der Gleichstrommotor 10 im Dauerlastbetrieb gefahren, wobei stabile Bedingungen nach circa einer Zeit eintreten, die dem Drei- bis Fünffachen einer thermischen System-Zeit-Konstante des Gleichstrommotors 10 entsprechen. Die diesen Bedingungen entsprechenden Pulweiten-Modulations-Signale 16 werden durch die Ansteuerschaltung 18 erfaßt und abgespeichert und bei der späteren Temperaturbestimmung unter Einsatzbedingungen herangezogen.

Die Grenzleistung $P_{grenz}$ wird aus dem zeitlichen Anstieg des Integrationswertes $P_{neu}$ ermittelt, der zunächst noch mit $P_{grenz} = 0$ berechnet wird und somit monoton steigt. Das Berücksichtigen des dann ermittelten Wertes für die Grenzleistung $P_{grenz}$ bewirkt, daß bei maximaler zulässiger Belastung des Gleichstrommotors 10 der Integrationswert $P_{neu}$ unverändert bleibt. Die Festlegung der Warnleistung $P_{warn}$ erfolgt unterhalb der Abschaltleistung $P_{max}$.

Um auch den genannten adiabatischen Fall berücksichtigen zu können, bei dem eine extreme Erwärmung infolge fehlender Wärmeabfuhr über die Kohlebürsten gegeben ist, ist vorgesehen, die momentane Leistung $P_{mom}$ mit einer Filterleistung $P_{filter}$ zu filtern. Die Filterleistung ergibt sich hierbei aus folgender Beziehung

$$P_{filter} = K \cdot \frac{T_a}{(T_a + T) \cdot P_{mom}} + \frac{T}{(T_a + T) \cdot P_{filter}},$$

wobei K ein Verstärkungsfaktor, $T_a$ eine Abtastzeit und T ein Tau-Wert ist.

Überschreitet die Filterleistung $P_{filter}$ eine Warnleistung $P_{warn}$, kann auf eine weniger thermisch belastende Regelstrategie zur Ansteuerung des Gleichstrommotors 10 umgeschaltet werden. Beim Überschreiten der Abschaltleistung $P_{max}$' wird der Gleichstrommotor 10 abgeschaltet. Die Filterleistung $P_{filter}$ sinkt dann mit einer Zeitkonstante bis zum Erreichen einer Minimalleistung $P_{min}$'. Zu diesem Zeitpunkt bleibt die Filterleistung $P_{filter}$ konstant, und der Gleichstrommotor 10 kann erneut eingeschaltet werden.

Die Zeitkonstante des Filters liegt in der Größenordnung, in der der Gleichstrommotor 10 durch maximal mögliche Belastung von seiner Betriebstemperatur auf eine kritische Temperatur erwärmt wird. Eine Parametrierung erfolgt durch Analyse einer kurzzeitig maximal zulässigen Belastung mit der kritischen Temperatur. Diese kurzzeitige Belastung besitzt eine Größenordnung von zirka dem dreifachen Wert der Zeitkonstante. Die maximal zulässige Belastung kann beispielsweise durch einen Hochlauf des Gleichstrommotors unter maximaler Last bei ungünstigster zu erwartender Umgebungstemperatur sein. Die Filterleistung $P_{filter}$ wird vorerst ohne Abschaltleistung $P_{max}$' implementiert und so das unter der Höchstlast erreichte Maximum der Filterleistung $P_{filter}$ ermittelt. Die Abschaltleistung $P_{max}$' wird dann geringfügig größer als diese erreichte maximale Filterleistung $P_{filter}$ gewählt. Die Warnleistung $P_{warn}$' wird wiederum unterhalb der Abschaltleistung $P_{max}$' gewählt.

Die beiden genannten Betriebsfälle, der diabatische Fall beziehungsweise der adiabatische Fall, werden beim bestimmungsgemäßen Einsatz des Gleichstrommotors 10 gemischt vorkommen. Insofern ist eine Verknüpfung der genannten ermittelten Werte notwendig. Hierbei erfolgt eine ODER-Verknüpfung der Warnleistung $P_{warn}$ gemäß dem diabatischen Fall mit der Warnleistung $P_{warn}$' gemäß dem adiabatischen Fall. Eine Abschaltung des Gleichstrommotors 10 erfolgt ebenfalls durch eine ODER-Verknüpfung der beiden Abschaltleistungen $P_{max}$ beziehungsweise $P_{warn}$' des diabatischen Falles beziehungsweise des adiabatischen Falles. Ein Wiedereinschalten des Gleichstrommotors 10 ist nur möglich, wenn bei beiden Fällen eine Wiedereinschaltung gestattet ist, das heißt, die minimale Leistung $P_{min}$ des diabatischen Falles und des adiabatischen Falles sind durch eine UND-Verknüpfung verbunden.

Insgesamt wird somit durch einfache Ausgestaltung beziehungsweise Auslegung der Auswerteschaltung 18 mit der Überlaststufe 20 eine Beeinflussung des Pulsweiten-Modulations-Signales 16 zur Ansteuerung des Gleichstrommotors 10 möglich. Zusätzliche Temperaturmessungen oder Strommessungen sind nicht erforderlich. Der Überlaststufe 20 muß lediglich eine Anfangstemperatur mitgeteilt werden. Diese kann beispielsweise die synthetische Vorgabe eines Anfangswertes sein, der den schlechtmöglichsten Betriebsbedingungen des Gleichstrommotors 10 entspricht. Ferner ist denkbar, eine von anderen Sensoren, beispielsweise innerhalb eines Kraftfahrzeuges angeordneten Temperatursensoren, gelieferte Außentemperatur mit einer Abschaltzeit des Gleichstrommotors 10 zu verknüpfen, um so einen Anfangswert zu generieren.

**Patentansprüche**

1. Elektromotorischer Antrieb, mit einem über eine Endstufe (12) ansteuerbaren Elektromotor (10), wobei der Endstufe eine einen Mikroprozessor aufweisende Ansteuerschaltung (18) zugeordnet ist, mittels der eine pulsweiten-modulierte Ansteuerung der Endstufe erfolgt, und die Ansteuerschaltung eine Überlaststufe (20) umfaßt, die eine Überlastung des Elektromotors aus einer Temperatur des Elektromotors detektiert, **dadurch gekennzeichnet, daß** die Temperatur des Elektromotors aus einem Pulsweiten-Modulations-Signal (16) der Ansteuerschaltung (18) gewonnen wird.

2. Elektromotorischer Antrieb nach Anspruch 1, **dadurch gekennzeichnet, daß** das Pulsweiten-Modulations-Signal (16) in wählbaren Zeitintervallen ausgewertet wird.

3. Elektromotorischer Antrieb nach Anspruch 2, **dadurch gekennzeichnet, daß** das Pulsweiten-Modulations-Signal (16) mit jeder n-ten Flanke ausgewertet wird.

4. Elektromotorischer Antrieb nach einem der vorhergehenden Ansprüche, **dadurch gekennzeichnet, daß** zu jedem Zeitintervall eine Differenzleistung ($P_{diff}$) aufintegriert wird, die sich aus einer aus dem Pulsweiten-Modulations-Signal (16) gewonnenen Momentanleistung ($P_{mom}$) und einer gerätespezifisch festgelegten Grenzleistung ($P_{grenz}$) ergibt.

5. Elektromotorischer Antrieb nach einem der vorhergehenden Ansprüche, **dadurch gekennzeichnet, daß** bei Erreichen einer gerätespezifisch festgelegten Warnleistung ($P_{warn}$) durch die aufintegrierte Leistung ($P_{neu}$) des Pulsweiten-Modulations-Signales (16) zur Ansteuerung des Elektromotors (10) variiert wird.

6. Elektromotorischer Antrieb nach einem der vorhergehenden Ansprüche, **dadurch gekennzeichnet, daß** bei Erreichen einer gerätespezifisch festgelegten Abschaltleistung ($P_{max}$) durch die aufintegrierte Leistung ($P_{neu}$) der Elektromotor (10) abgeschaltet wird.

7. Elektromotorischer Antrieb nach einem der vorhergehenden Ansprüche, **dadurch gekennzeichnet, daß** ein Wiedereinschalten des Elektromotors (10) erfolgt, wenn die weiter in den festgelegten Zeitintervallen ermittelte aufintegrierte Leistung ($P_{neu}$) eine gerätespezifische festlegbare Leistung ($P_{min}$) erreicht beziehungsweise unterschreitet.

8. Elektromotorischer Antrieb nach Anspruch 4, **dadurch gekennzeichnet, daß** die aus dem Pulsweiten-Modulations-Signal (16) gewonnene Momentanleistung ($P_{mom}$) mit einer Filterleistung ($P_{filter}$) gefiltert wird.

9. Elektromotorischer Antrieb nach Anspruch 8, **dadurch gekennzeichnet, daß** bei Erreichen einer gerätespezifisch festgelegten Warnleistung ($P_{warn}'$) durch die Filterleistung ($P_{filter}$) das Pulsweiten-Modulations-Signal (16) zur Ansteuerung des Elektromotors (10) variiert wird.

10. Elektromotorischer Antrieb nach einem der Ansprüche 8 und 9, **dadurch gekennzeichnet, daß** bei Erreichen einer gerätespezifisch festgelegten Abschaltleistung ($P_{max}'$) durch die Filterleistung ($P_{filter}$) der Elektromotor (10) abgeschaltet wird.

11. Elektromotorischer Antrieb nach einem der Ansprüche 8 bis 10, **dadurch gekennzeichnet, daß** ein Wiedereinschalten des Elektromotors (10) erfolgt, wenn die Filterleistung ($P_{filter}$) auf eine gerätespezifisch festgelegte Leistung ($P_{min}$) abgesunken ist.

12. Elektromotorischer Antrieb nach Anspruch 11, **dadurch gekennzeichnet, daß** die Filterleistung ($P_{filter}$) mit einer gerätespezifisch festlegbaren Zeitkonstante sinkt.

13. Elektromotorischer Antrieb nach einem der vorhergehenden Ansprüche, **dadurch gekennzeichnet, daß** das Pulsweiten-Modulations-Signal (16) variiert wird, wenn die Warnleistung ($P_{warn}$) oder die Warnleistung ($P_{warn}'$) erreicht ist.

14. Elektromotorischer Antrieb nach einem der vorhergehenden Ansprüche, **dadurch gekennzeichnet, daß** eine Abschaltung des Elektromotors (10) erfolgt, wenn die Abschaltleistung ($P_{max}$) oder die Abschaltleistung ($P_{max}'$) erreicht ist.

15. Elektromotorischer Antrieb nach einem der vorhergehenden Ansprüche, **dadurch gekennzeichnet, daß** eine Wiedereinschaltung des Elektromotors (10) erfolgt, wenn die Leistung ($P_{min}$) und die Leistung ($P_{min}'$) erreicht ist.

## Claims

1. Electric motor drive having an electric motor (10) which can be driven by means of an output stage (12), the output stage having an associated drive circuit (18) which has a microprocessor, is used to drive the output stage by pulse width modulation, and comprises an overload stage (20) which detects from the temperature of the electric motor when the said electric motor is overloaded, **characterized in that** the temperature of the electric motor is obtained from a pulse width modulation signal (16) from the drive circuit (18).

2. Electric motor drive according to Claim 1, **charac-**

**terized in that** the pulse width modulation signal (16) is evaluated at time intervals which can be chosen.

3. Electric motor drive according to Claim 2, **characterized in that** the pulse width modulation signal (16) is evaluated with each n-th edge.

4. Electric motor drive according to one of the preceding claims, **characterized in that** a power difference ($P_{diff}$) is integrated over each time interval, this power difference being produced from an instantaneous power ($P_{instant}$) which is obtained from the pulse width modulation signal (16) and a limit power ($P_{limit}$) which is defined on a device-specific basis.

5. Electric motor drive according to one of the preceding claims, **characterized in that** the pulse width modulation signal (16) for driving the electric motor (10) is varied when the integrated power ($P_{new}$) reaches a warning power ($P_{warn}$) which is defined on a device-specific basis.

6. Electric motor drive according to one of the preceding claims, **characterized in that** the electric motor (10) is switched off when the integrated power ($P_{new}$) reaches a switch-off power ($P_{max}$) which is defined on a device-specific basis.

7. Electric motor drive according to one of the preceding claims, **characterized in that** the electric motor (10) is switched on again when the integrated power ($P_{new}$) which is further determined at the defined time intervals reaches or falls below a power ($P_{min}$) which can be defined on a device-specific basis.

8. Electric motor drive according to Claim 4, **characterized in that** the instantaneous power ($P_{instant}$) which is obtained from the pulse width modulation signal (16) is filtered by a filtering power ($P_{filter}$).

9. Electric motor drive according to Claim 8, **characterized in that** the pulse width modulation signal (16) for driving the electric motor (10) is varied when the filtering power ($P_{filter}$) reaches a warning power ($P_{warn}$') which is defined on a device-specific basis.

10. Electric. motor drive according to either of Claims 8 and 9, **characterized in that** the electric motor (10) is switched off when the filtering power ($P_{filter}$) reaches a switch-off power ($P_{max}$') which is defined on a device-specific basis.

11. Electric motor drive according to one of Claims 8 to 10, **characterized in that** the electric motor (10) is switched on again when the filtering power ($P_{filter}$) has fallen to a power ($P_{min}$) which is defined on a device-specific basis.

12. Electric motor drive according to Claim 11, **characterized in that** the filtering power ($P_{filter}$) decreases with a time constant which can be defined on a device-specific basis.

13. Electric motor drive according to one of the preceding claims, **characterized in that** the pulse width modulation signal (16) is varied when the warning power ($P_{warn}$) or the warning power ($P_{warn}$') is reached.

14. Electric motor drive according to one of the preceding claims, **characterized in that** the electric motor (10) is switched off when the switch-off power ($P_{max}$) or the switch-off power ($P_{max}$') is reached.

15. Electric motor drive according to one of the preceding claims, **characterized in that** the electric motor (10) is switched on again when the power ($P_{min}$) or the power ($P_{min}$') is reached.

**Revendications**

1. Système de commande par moteur électrique doté d'un moteur électrique (10) pouvant être amorcé par un étage de sortie (12), un circuit d'amorçage (18) présentant un microprocesseur associé à l'étage de sortie, au moyen duquel se produit l'amorçage de l'étage de sortie par modulation d'impulsions en largeur, et le circuit d'amorçage comprenant un étage de surcharge (20) qui détecte une surcharge du moteur électrique à partir d'une température du moteur électrique,
**caractérisé en ce que**
la température du moteur électrique est obtenue grâce à un signal de modulation d'impulsions en largeur (16) du circuit d'amorçage (18).

2. Système de commande par moteur électrique selon la revendication 1,
**caractérisé en ce que**
le signal de modulation d'impulsions en largeur (16) est exploité à des intervalles pouvant être sélectionnés.

3. Système de commande par moteur électrique selon la revendication 2,
**caractérisé en ce que**
le signal de modulation d'impulsions en largeur (16) est exploité toutes les n brides.

4. Système de commande par moteur électrique selon l'une quelconque des revendications précédentes,
**caractérisé en ce qu'**
une puissance différentielle ($P_{diff}$) qui résulte d'une puissance instantanée ($P_{inst}$) calculée à partir du signal de modulation d'impulsions en largeur (16) et à partir d'une puissance limite ($P_{lim}$) définie spécifiquement suivant l'appareil est intégrée à chaque intervalle.

**5.** Système de commande par moteur électrique selon l'une quelconque des revendications précédentes, **caractérisé en ce que**

la puissance ($P_{nouveau}$) intégrée du signal de modulation d'impulsions en largeur (16) procède à une variation afin d'amorcer le moteur électrique (10) lorsqu'une puissance d'avertissement ($P_{avert}$) définie spécifiquement suivant l'appareil est atteinte.

**6.** Système de commande par moteur électrique selon l'une quelconque des revendications précédentes, **caractérisé en ce que**

la puissance intégrée ($P_{nouveau}$) du moteur électrique (10) procède à la coupure lorsqu'une puissance de coupure ($P_{max}$) définie spécifiquement suivant l'appareil est atteinte.

**7.** Système de commande par moteur électrique selon l'une quelconque des revendications précédentes, **caractérisé en ce qu'**

un réenclenchement du moteur électrique (10) se produit lorsque la puissance ($P_{nouveau}$) intégrée calculée en plus dans les intervalles définis atteint et/ou est inférieure à une puissance ($P_{min}$) pouvant être définie spécifiquement suivant l'appareil.

**8.** Système de commande par moteur électrique selon la revendication 4, **caractérisé en ce que**

la puissance instantanée ($P_{inst}$) obtenue à partir du signal de modulation d'impulsions en largeur (16) est filtrée à l'aide d'une puissance de filtration ($P_{filtre}$).

**9.** Système de commande par moteur électrique selon la revendication 8, **caractérisé en ce que**

la puissance de filtration ($P_{filter}$) procède à une variation du signal de modulation d'impulsions en largeur (16) afin d'amorcer le moteur électrique (10) lorsqu'une puissance d'avertissement ($P_{avert'}$) définie spécifiquement suivant l'appareil est atteinte.

**10.** Système de commande par moteur électrique selon l'une quelconque des revendications 8 et 9, **caractérisé en ce que**

la puissance de filtration ($P_{filtre}$) du moteur électrique (10) procède à la coupure lorsqu'une puissance de coupure ($P_{max'}$) définie spécifiquement suivant l'appareil est atteinte.

**11.** Système de commande par moteur électrique selon l'une quelconque des revendications 8 à 10, **caractérisé en ce qu'**

un réenclenchement du moteur électrique (10) se produit lorsque la puissance de filtration ($P_{filtre}$) est inférieure à une puissance ($P_{min}$) définie spécifiquement suivant l'appareil.

**12.** Système de commande par moteur électrique selon la revendication 11, **caractérisé en ce que**

la puissance de filtration ($P_{filtre}$) diminue selon une constante de temps pouvant être définie spécifiquement suivant l'appareil.

**13.** Système de commande par moteur électrique selon l'une quelconque des revendications précédentes, **caractérisé en ce que**

le signal de modulation d'impulsions en largeur (16) varie lorsque la puissance d'avertissement ($P_{avert}$) ou la puissance d'avertissement ($P_{avert'}$) est atteinte.

**14.** Système de commande par moteur électrique selon l'une quelconque des revendications précédentes, **caractérisé en ce que**

le moteur électrique (10) est coupé lorsque la puissance de coupure ($P_{max}$) ou la puissance de coupure ($P_{max'}$) est atteinte.

**15.** Système de commande par moteur électrique selon l'une quelconque des revendications précédentes, **caractérisé en ce qu'**

un réenclenchement du moteur électrique (10) se produit lorsque la puissance ($P_{min}$) et la puissance ($P_{min'}$) sont atteintes.

Fig. 1